# EUROPEAN PATENT APPLICATION

(11) **EP 4 428 022 A1**
(43) Date of publication of application: **11.09.2024**
(21) Application number: 23214172.1
(22) Date of filing: 05.12.2023
(51) Int. Cl.: B62J 23/00, B62K 19/00, B62J 11/13, B62K 19/30

(54) **TUBULAR END OPENING PROTECTION APPARATUS**

(30) Priority: 10.03.2023 CN 202320450549 U
(71) Applicant: Tenways Technovation Europe B.V., 1014 BA Amsterdam (NL)
(72) Inventor: HUANG, He, Shenzhen, 518000 (CN)
(74) Representative: Zaboliene, Reda

(57) **Abstract**

The application provides a tubular end opening protection apparatus, which includes a frame bottom tube body, the bottom of the frame bottom tube body is provided with a plastic bottom cover; a drainage hole penetrating through the interior is formed in a position, close to the edge on one side, of the bottom of the plastic bottom cover. On the one hand, the plastic bottom cover is fixed to the bottom of the frame bottom tube body, so that brake cables of a bicycle are protected, and meanwhile, dust and water at the bottom are prevented from entering; on the other hand, the drainage hole is formed in the plastic bottom cover, and the bottom surface of the interior of the plastic bottom cover is inclined, so that the water infiltrated to the interior of the frame bottom tube body is discharged in time.

## Description

### CROSS-REFERENCE TO RELATED APPLICATIONS

This application claims priority to Chinese Patent Application No. 202320450549.5, filed on March 10, 2023, which are incorporated herein by reference in their entirety.

### TECHNICAL FIELD

The application relates to the technical field of bicycle frame bottom tube protection, and in particular to a tubular end opening protection apparatus.

### BACKGROUND

A bicycle, also known as a pedal cycle or cycle, is typically a small land vehicle with two wheels. After a person rides on the bicycle, the bicycle is powered by stepping on pedals and is considered a green and environmentally friendly means of transportation. In actual use, the bottom of a bicycle frame is usually provided with a frame bottom tube, configured to connect a seat cushion to pedal rotating shaft connections, so that assembly and butt joint are facilitated.

However, the bottom of the frame bottom tube of the bicycles on the market is usually fixedly connected to the pedal rotating shaft connections, when rainwater penetrates to the interior of the frame bottom tube, the bottom of the frame bottom tube and the pedal rotating shafts are prone to rust, and meanwhile, due to the fact that brake cables of the bicycle are routed from the interior of the frame bottom tube, accumulation of influent water easily rusts the brake cables to affect the effect of pulling brake pads.

In view of this, the application is proposed.

### SUMMARY

The technical problem to be solved by the application is to provide a tubular end opening protection apparatus, so as to overcome the problems in the related art that the bottom of the frame bottom tube of bicycles on the market is usually fixedly connected to pedal rotating shaft connections, when rainwater penetrates to the interior of the frame bottom tube, the bottom of the frame bottom tube and the pedal rotating shaft connections are prone to rust, and meanwhile, due to the fact that brake cables of the bicycle are routed from the interior of the frame bottom tube, accumulation of influent water easily rusts the brake cables to affect the effect of pulling brake pads.

In order to solve the above technical problems, the basic concept of the technical solution adopted by the application is as follows.

A tubular end opening protection apparatus includes a frame bottom tube body. The bottom of the frame bottom tube body is open, a bayonet is formed in a position, close to a bottom edge, between inner walls of the frame bottom tube body, and the bottom of the frame bottom tube body is provided with a plastic bottom cover. Clamping blocks clamped to the interior of the bayonet are both fixed to positions, close to edges on both sides, of the top of the plastic bottom cover, a drainage hole penetrating through the interior is formed in a position, close to the edge on one side, of the bottom of the plastic bottom cover, and a bottom surface of the interior of the plastic bottom cover is inclined. The drainage hole is formed in the plastic bottom cover, and the bottom surface of the interior of the plastic bottom cover is inclined, so that the water infiltrated to the interior of the frame bottom tube body is discharged in time.

Optionally, the drainage hole is located at the lowest part of the bottom surface of the interior of the plastic bottom cover. A threaded hole is formed in one side of each of the two clamping blocks, connecting holes penetrating through the interior of the bayonet are both formed in positions, close to the bottom edge, of both sides of the frame bottom tube body, the two connecting holes correspond to the threaded holes, and the interior of each of the two threaded holes is provided with a rubber sealing sleeve, so that a joint is tighter during butt joint.

Optionally, the interior of each of the two connecting holes is provided with a locking bolt, and one end of each of the two locking bolts correspondingly extends to the interior of the threaded hole. A guide sleeve is fixed to the bottom of the frame bottom tube body. A limiting plate is fixed to the bottom surface of the interior of the plastic bottom cover, and one side of the plastic bottom cover is provided with a butt arc edge. One side of the plastic bottom cover is provided with the butt arc edge, so as to be attached to the outer surface of the guide sleeve, and connected to the joint when being in butt joint with an external chain dust plate, thereby making the overall appearance of the bicycle smoother.

After adopting the technical solution, the application has the following beneficial effects compared with the related art. Of course, any product implementing the application does not necessarily need to achieve all the advantages described below at the same time.

1. In the application, when the apparatus is used, on the one hand, the plastic bottom cover is fixed to the bottom of the frame bottom tube body, so that the brake cables of the bicycle are protected, and meanwhile, dust and water at the bottom are prevented from entering; on the other hand, the drainage hole is formed in the plastic bottom cover, and the bottom surface of the interior of the plastic bottom cover is inclined, so that the water infiltrated to the interior of the frame bottom tube body is discharged in time.

2. In the application, when the plastic bottom cover is in butt joint, the two clamping blocks on the plastic bottom cover are installed to the interior of the bayonet, and then the threaded holes correspond to the connecting holes, so that the plastic bottom cover is in butt joint with and clamped to the frame bottom tube body through the locking bolts, and one side of the plastic bottom cover is provided with the butt arc edge, so as to be attached to the outer surface of the guide sleeve, and connected to the joint when being in butt joint with the external chain dust plate, thereby making the overall appearance of the bicycle more smooth. The interiors of the threaded holes are provided with the rubber sealing sleeves, which makes the joint tighter during butt joint.

### BRIEF DESCRIPTION OF THE DRAWINGS

The drawings described below are only some embodiments. Other drawings may further be obtained by those of ordinary skill in the art according to these drawings without creative efforts. In the drawings:
Fig. 1 is a main view of a stereoscopic structure of a tubular end opening protection apparatus provided by the application.
Fig. 2 is a top view of a stereoscopic structure of a plastic bottom cover in a tubular end opening protection apparatus provided by the application.
Fig. 3 is an enlarged view of the application at a place A in Fig. 2.

### DETAILED DESCRIPTION OF THE EMBODIMENTS

The application is further described now with reference to the drawings.

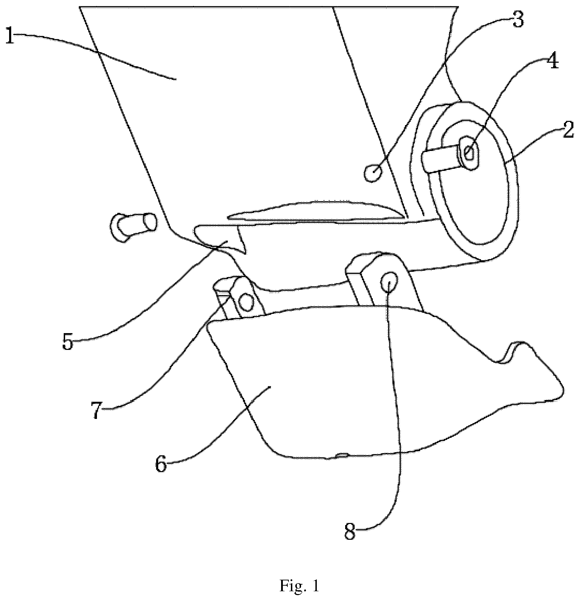

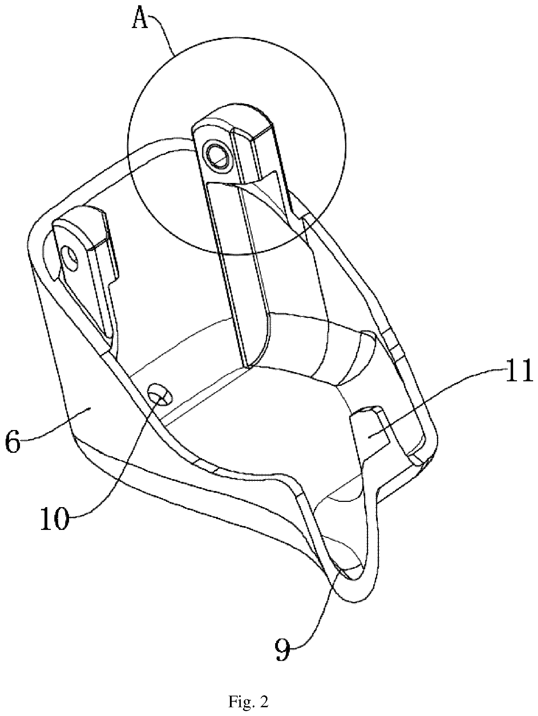

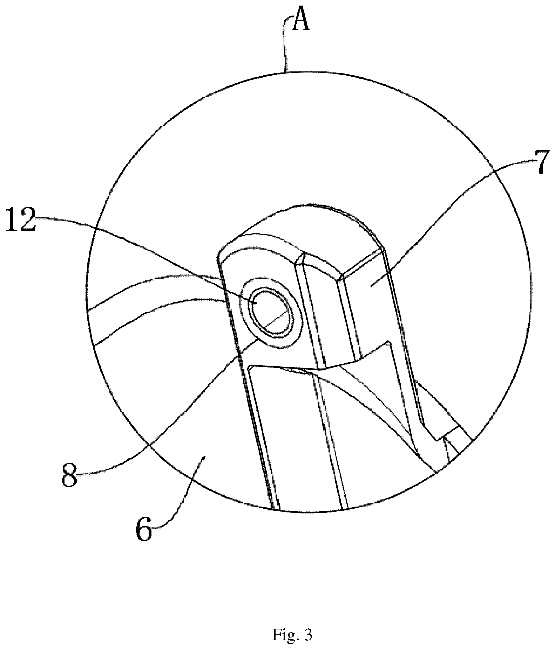

Embodiment 1, as shown in Figs. 1 to 3, the application provides a technical solution of a tubular end opening protection apparatus, which includes a frame bottom tube body 1. The bottom of the frame bottom tube body 1 is open, a bayonet 5 is formed in a position, close to a bottom edge, between inner walls of the frame bottom tube body 1, and the bottom of the frame bottom tube body 1 is provided with a plastic bottom cover 6. Clamping blocks 7 clamped to the interior of the bayonet 5 are both fixed to positions, close to edges on both sides, of the top of the plastic bottom cover 6, a drainage hole 10 penetrating through the interior is formed in a position, close to the edge on one side, of the bottom of the plastic bottom cover 6, and a bottom surface of the interior of the plastic bottom cover 6 is inclined.

The effects achieved by the whole Embodiment 1 are that: on the one hand, the plastic bottom cover 6 is fixed to the bottom of the frame bottom tube body 1, so that brake cables of a bicycle are protected, and meanwhile, dust and water at the bottom are prevented from entering; on the other hand, the drainage hole 10 is formed in the plastic bottom cover 6, and the bottom surface of the interior of the plastic bottom cover 6 is inclined, so that the water infiltrated to the interior of the frame bottom tube body 1 is discharged in time.

The application solves the problems that the bottom of the frame bottom tube of the bicycles on the market is usually fixedly connected to pedal rotating shaft connections, when rainwater penetrates to the interior of the frame bottom tube, the bottom of the frame bottom tube and the pedal rotating shaft connections are prone to rust, and meanwhile, due to the fact that the brake cables of the bicycle are routed from the interior of the frame bottom tube, accumulation of influent water easily rusts the brake cables to affect the effect of pulling brake pads.

Embodiment 2, as shown in Figs. 1 to 3, the drainage hole 10 is located at the lowest part of the bottom surface of the interior of the plastic bottom cover 6. A threaded hole 8 is formed in one side of each of the two clamping blocks 7, connecting holes 3 penetrating through the interior of the bayonet 5 are both formed in positions, close to the bottom edge, of both sides of the frame bottom tube body 1, the two connecting holes 3 correspond to the threaded holes 8, and the interior of each of the two threaded holes 8 is provided with a rubber sealing sleeve 12. The interior of each of the two connecting holes 3 is provided with a locking bolt 4, and one end of each of the two locking bolts 4 correspondingly extends to the interior of the threaded hole 8. A guide sleeve 2 is fixed to the bottom of the frame bottom tube body 1. A limiting plate 11 is fixed to the bottom surface of the interior of the plastic bottom cover 6, and one side of the plastic bottom cover 6 is provided with a butt arc edge 9.

The effects achieved by the whole Embodiment 2 are that: when the plastic bottom cover 6 is in butt joint, the two clamping blocks 7 on the plastic bottom cover 6 are installed to the interior of the bayonet 5, and then the threaded holes 8 correspond to the connecting holes 3, so that the plastic bottom cover 6 is in butt joint with and clamped to the frame bottom tube body 1 through the locking bolts 4, and the interiors of the threaded holes 8 are provided with the rubber sealing sleeves 12, which makes a joint tighter during butt joint.

One side of the plastic bottom cover 6 is provided with the butt arc edge 9, so as to be attached to the outer surface of the guide sleeve 2, and connected to the joint when being in butt joint with an external chain dust plate, thereby making the overall appearance of the bicycle smoother.

The application is not limited to the above implementations, and any person should be aware of structural changes made under the inspiration of the application, and any technical solutions identical or similar to the application shall fall within the scope of protection of the application. The technologies, shapes and structural parts of the application not described in detail are all known technologies.

## Claims

1. A tubular end opening protection apparatus, comprising a frame bottom tube body, wherein the bottom of the frame bottom tube body is open, a bayonet is formed in a position, close to a bottom edge, between inner walls of the frame bottom tube body, and the bottom of the frame bottom tube body is provided with a plastic bottom cover; and clamping blocks clamped to the interior of the bayonet are both fixed to positions, close to edges on both sides, of the top of the plastic bottom cover, a drainage hole penetrating through the interior is formed in a position, close to the edge on one side, of the bottom of the plastic bottom cover, and a bottom surface of the interior of the plastic bottom cover is inclined.

2. The tubular end opening protection apparatus according to claim 1, wherein the drainage hole is located at the lowest part of the bottom surface of the interior of the plastic bottom cover; and a threaded hole is formed in one side of each of the two clamping blocks.

3. The tubular end opening protection apparatus according to claim 2, wherein connecting holes penetrating through the interior of the bayonet are both formed in positions, close to the bottom edge, of both sides of the frame bottom tube body.

4. The tubular end opening protection apparatus according to claim 3, wherein the two connecting holes correspond to the threaded holes; and the interior of each of the two threaded holes is provided with a rubber sealing sleeve.

5. The tubular end opening protection apparatus according to claim 4, wherein the interior of each of the two connecting holes is provided with a locking bolt, and one end of each of the two locking bolts correspondingly extends to the interior of the threaded hole.

6. The tubular end opening protection apparatus according to claim 1, wherein a guide sleeve is fixed to the bottom of the frame bottom tube body; and a limiting plate is fixed to the bottom surface of the interior of the plastic bottom cover, and one side of the plastic bottom cover is provided with a butt arc edge.
